(19) Europäisches Patentamt
European Patent Office
Office européen des brevets

(11) Publication number: 0 466 061 A2

(12) # EUROPEAN PATENT APPLICATION

(21) Application number: 91111278.7

(22) Date of filing: 06.07.91

(51) Int. Cl.[5]: C08L 101/00, C08L 79/08, C08L 63/00, C08L 51/08, //(C08L101/00,63:00,79:08)

(30) Priority: 13.07.90 US 553210

(43) Date of publication of application: 15.01.92 Bulletin 92/03

(84) Designated Contracting States: BE CH DE DK ES FR GB GR IT LI LU NL SE

(71) Applicant: The B.F. Goodrich Company
3925 Embassy Parkway
Akron Ohio 44313(US)

(72) Inventor: Mertzel, Elaine Audrey
222272, River Walk Road
Rockey River, Ohio 44116(US)
Inventor: Sullivan, Francis Ryan
1401 Lynn Park Drive
Cleveland Heights, Ohio 44118(US)
Inventor: Mayer, Lance Anthony
17045 Partridge Drive
Strongsville, Ohio 44136(US)

(74) Representative: von Kreisler, Alek, Dipl.-Chem. et al
Patentanwälte Von Kreisler-Selting-Werner,
Deichmannhaus am Hauptbahnhof
W-5000 Köln 1(DE)

(54) **Polymeric/polyimide compositions having enhanced electrostatic dissipation.**

(57) The subject invention relates to an electrostatic dissipative polymeric composition. It has been found that the incorporation of a polyimide into a base polymer will enhance the electrostatic dissipative properties (ESD) of the composition comprising a base polymer and an ESD additive. This enhancement of the ESD properties is illustrated by the decrease in both the surface resistivity and volume resistivity. In compositions employing the same ESD additive this enhancement provided by the incorporation of the polyimide could allow a reduction of electrostatic dissipative additive required to achieve acceptable results. Further, the improved properties could allow the material to be adopted for specific applications that cannot be normally achieved without the enhanced properties.

EP 0 466 061 A2

## Field of the Invention

This invention relates to new polymeric compositions having electrostatic dissipative (ESD) properties. The compositions, containing an ESD additive, of the present invention incorporate a polyimide as an additional additive to enhance the ESD properties of the composition. This enhancement of the ESD properties will allow the compositions of the invention to use lower loadings of the ESD additive thereby diminishing any detrimental effects that an ESD additive may impart. Further, these compositions when molded into finished products exhibit improved physical properties.

## Background of the Invention

The formation and retention of charges of static electricity on the surface of most plastics is well known. Plastic materials have a significant tendency to accumulate static electrical charges due to low electrical conductivity. The presence of static electrical charges on sheets of thermoplastic film, for example, can cause the sheets to stick to one another thus making their separation for further processing more difficult. Moreover, the presence of static electrical charges causes dust to stick to items packaged in a plastic bag, for example, which may negate any sales appeal.

The increasing complexity and sensitivity of microelectronic devices make the control of static discharge of particular concern to the electronic industry. Even a low voltage discharge can cause severe damage to sensitive devices. The need to control static charge buildup and dissipation often requires the total assembly environment to be constructed of partially conductive materials. It also may require making electrostatic protective packages, tote boxes, casings, and covers from conductive polymeric materials to store, ship, protect, or support electrical devices and equipment.

The prevention of the buildup of static electrical charges that accumulate on plastics during manufacturing or use can be prevented by using various electrostatic dissipative (ESD) materials which are well known in the art. These materials can be applied as a coating that may be sprayed or dip coated on the article after manufacture although this method usually results in a temporary solution. Alternatively these materials can be incorporated into the polymer as additives during processing thereby providing a greater measure of permanence.

The incorporation of certain polyimide polymers into other polymers is well known. These materials are normally added to the polymers to increase the heat distortion temperatures of the base polymer.

## Summary of the Invention

We have found that the incorporation of at least one polyimide into a base polymer will enhance the electrostatic dissipative properties (ESD) of the composition comprising a base polymer and an ESD additive. This enhancement of the ESD properties is illustrated by the decrease in both the surface resistivity and volume resistivity. In compositions employing the same ESD additive this enhancement provided by the incorporation of the polyimide could allow a reduction of electrostatic dissipative additive required to achieve acceptable results. Further, the improved properties could allow the material to be adopted for specific applications that cannot be normally achieved without the enhanced properties.

The present invention further contemplates a process for preparing an electrostatic dissipative polymeric composition which comprises the step of adding to a base polymer blend which comprises the base polymer, at least one polyimide and an effective amount of an electrostatic dissipative additive.

The present invention also contemplates articles made from the novel compositions of this invention which have the unique properties of ESD and improved high temperature properties.

## Detailed Description of the Preferred Embodiments

The present invention relates to an electrostatic dissipative polymeric composition which comprises:

(a) a polymer blend comprising at least one base polymer and at least one polyimide; and

(b) at least one electrostatic dissipative additive.

The polymer blend is usually an intimate mixture of two polymers comprising the base polymer and the polyimide. Since polyvinyl chloride is the preferred base polymer, the invention will be described and exemplified using PVC as the base polymer.

The polymer blend can be formed by interpolymerization or by coating a polyimide on the base polymer resin. In the interpolymerization process the monomer is polymerized in the presence of a polyimide polymer. The interpolymer is prepared via polymerization wherein the polyimide is dissolved or

swollen in monomer or a suitable solvent prior to polymerization. The mass polymerization process is preferred for preparing the interpolymer. The preparation of interpolymers via mass polymerization is generally carried out in steps. The initial step, prepolymerization, requires a baffled vessel (prepolymerizer) equipped with an agitator that typically contains both turbine and marine-propeller type blades. The prepolymerizer is evacuated or purged with nitrogen to remove oxygen. At this point any additives such as nitric acid polyvinyl acetate or vinyl acetate-crotonic acid copolymer, epoxidized soy bean oil or epoxidized soy bean oil with xylene, which may be required, can be added. The vessel will be charged with monomer to a loading of about 75-90%. The agitator is now operated at a suitable speed to obtain the desired particle size and an initiator is added.

The prepolymerizer contents are heated at a rate of approximately 1-2 degrees Celsius/minute to the desired reaction temperature. The reaction is run a length of time sufficient to produce 6-12% conversion. At that time the contents are transferred to a previously prepared vessel hereinafter called the reactor.

The reactor employed is a reaction vessel that is designed for mixing solids rather than liquids. It may be vertical or horizontal. The typical reactor will be equipped with a blade that will scrape close to the walls and provide mixing of the solid powdered contents. It would typically have jacketed walls and/or a condenser for heat removal.

Prior to the transfer of the contents of the prepolymerizer to the reactor, the following should have been done: a) the desired polymer to be interpolymerized should have been placed in the vessel; b) other additives should be in the vessel; c) the vessel should be purged to about 8 ppm or less of oxygen; and d) with agitation, additional monomer is added to the reactor. Typically, the amount of monomer added at this time will be enough to make a fluid solution of the polymer.

After the contents of the prepolymerizer have been added to the reactor, an additional initiator may be added to the reactor. Selection of the initiator will depend upon the desired reaction temperature, desired rate of conversion and other desired properties. Reaction temperatures usually range from about 45° to about 80°C. The contents of the reactor (with the contents of the prepolymerizer having been previously added) is heated to the desired reaction temperature. During the course of the polymerization, a vapor stream may be pulled from the top of the reactor and fed to an associated condenser to remove inert gases and/or reaction by-products. The reaction is continued to the desired conversion and the remaining monomer is then removed from the polymer by conventional means such as heating the polymer while evacuating the unreacted monomer.

Typical polymerization initiators are free-radical initiators having half-lives on the order of a few hours at 50°C. With such initiators about 60% of the monomer may be polymerized within the range of about three to about ten hours using the usual reaction temperature range. Preferred initiators include, but are not limited to, peroxydicarbonates, such as di(sec-butyl) peroxydicarbonate, di(2-ethylhexyl)peroxydicarbonate and di(4-t-butylcyclohexyl) peroxydicarbonate, peroxides such as lauroyl peroxide, benzoyl peroxide and acetyl cyclohexylsulphonyl peroxide, nitriles such as ozodiisobutyronitrile and azobis(2,4-dimethylvaleronitrile), alpha-cumylperoxy neodecanonate, t-butyl-peroxypivalate, t-amylperoxypivalate, and the like. The amount of initiator added will vary depending on the same aforementioned criteria that one skilled in the art would use to select the type of initiator.

Typically, antioxidants which can be employed in mass polymerization are, BHT, BHA, bisphenol A, octyl 3-(3',5'-di-t-butyl-4'-hydroxyphenyl)propionate, triethylene glycol bis-3-(3'-t-butyl-4'-hydroxy-5'-methylphenyl)propionate, and the like. Although the description herein is directed toward mass polymerization of vinyl chloride those skilled in the art could readily adapt this description to other methods of polymerisation, *e.g.*, suspension or dispersion and to the other monomers.

In an alternative method the polymer resin can be coated with a polyimide. The coating process wherein the polymer and the polyimide are an intimate blend is prepared by the process comprising a) dissolving the polyimide in a solvent to form a solution; b) contacting the base polymer with the solution; and c) removing the solvent thereby leaving the imide adsorbed on the base polymer. This process will leave the polyimide adsorbed on and in the pores of the base polymer.

Suitable solvents for dissolving the polyimide for use in the interpolymerization process or for coating of a polymer include halogenated hydrocarbon solvents like vinyl chloride, chloroethane, bromoethane, dichloroethane, chloroform, methylene chloride, trichloroethane, and the like, ethers like diethyl ether and the like, aromatic hydrocarbons like benzene, toluene and xylene and ketones having from three to six carbon atoms like acetone or methyl ethyl ketone. The preferred solvent for the coating process is vinyl chloride.

The preferred method for incorporation of the imide into the polymer blend is interpolymerization. The preferred method for polymerization is mass polymerization.

An intimate blend as defined herein refers to a mixture of polymers wherein substantially no large

distinct domains of the different components remain. Often mechanical blending, e.g., Henschel or Banbury mixing, is unable to accomplish this degree of association between polymers.

The amount of polyimide that can be incorporated into the interpolymer blend is up to about 100 parts by weight per 100 weight parts of Base polymer. In a preferred embodiment the amount of polyimide in the interpolymer blend is from about 4 parts to about 60 parts by weight per 100 weight parts of base polymer. The most preferred amount of polyimide in the interpolymer blend is from about 10 parts to about 60 parts by weight per 100 weight parts of base polymer.

The electrostatic dissipative (ESD) additive can be any additive which when added to the polymer blend will cause the composition to exhibit ESD properties. Examples of electrostatic dissipative additives are homopolymers, or copolymers of two or more copolymerizable cyclic ether monomers having the formula:

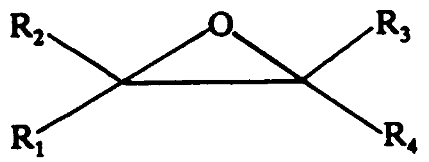

wherein $R_1$, $R_2$, $R_3$, and $R_4$ are independently hydrogen, unsubstituted or substituted alkyl, cycloalkyl, cycloalkenyl, aryl, aralkyl or alkaryl, the substituents are $OR_5$, $SR_5$, $NR_5R_6$, CN or halogens, $R_5$ and $R_6$ are independently hydrogen, alkyl, cycloalkyl, cycloalkenyl, aryl, aralkyl, alkaryl, or carboxyl.

The alkyl groups can have from 1 to 6 carbon atoms, be straight or branched chain and may be unsubstituted or substituted. The alkenyl groups can have from 1 to 6 carbon atoms, be straight or branched chain, have 1 or two double bonds and be unsubstituted or substituted.

The cycloalkyl and cycloalkenyl groups can have from 3 to 8 ring carbon atoms and from 1 to 3 rings. The cycloalkenyl groups can have 1 or 2 double bonds.

The aryl groups can have from 6 to 10 ring carbon atoms and one or two rings.

Suitable electrostatic dissipative additives for use in the subject invention are homopolymers of ethylene oxide, copolymers of ethylene oxide and one or more copolymerizable monomers or a chain extended polymer which is the product of a reaction between (A) a low molecular weight polyether oligomer having an average molecular weight from about 200 to about 10,000 and (B) a chain extender. A blend of more than one ESD additive may be used.

Examples of the preferred ESD additives are copolymers of ethylene oxide and epichlorohydrin, copolymer, of ethylene oxide and propylene oxide and a chain extended polymer wherein the low molecular weight polyether is polyethylene oxide and the chain extender is 4,4'-methylenebis(phenyl isocyanate) (MDI). The most preferred ESD additive is a copolymer of ethylene oxide and epichlorohydrin wherein the ethylene oxide is from about 75% to about 80% of the copolymer.

An effective amount of electrostatic dissipative additive required will be an amount that will produce the desired static dissipation. For an acceptable electrostatic dissipative polymer composition, the surface resistivity will be less than about 1 X $10^{14}$ Ohms/sq, or the volume resistivity will be less than about 1 X $10^{14}$ Ohms-cm. In a preferred embodiment, the surface resistivity of composition will be less than about 1 X $10^{13}$ Ohms/sq or the volume resistivity will be less than 1 X $10^{13}$ Ohms-cm. In the most preferred embodiment the surface resistivity of composition will be less than about 1 X $10^{12}$ Ohms/sq, and the volume resistivity less than about 1 X $10^{12}$ Ohms-cm.

The preferred amount of electrostatic dissipative additive in the polymeric compositions is from about 3 parts to about 100 parts by weight per 100 parts by weight of the interpolymer blend. In a preferred form the composition can have from about 5 parts to about 40 parts of the electrostatic dissipative additive per 100 parts by weight of the interpolymer blend. The most preferred composition will have from about 10 parts to about 30 parts of the electrostatic dissipative additive per 100 parts by weight of the interpolymer blend. The preferred level of ESD additive is of course dependent on the effectiveness of the particular ESD additive employed, which can be readily determined by those skilled in the art.

Polyimides are well known in the art. The term polyimide, as used herein, includes polymers having imido linkages in the polymer backbone and those having the imide structure attached to a carbon-carbon polymer backbone. Aromatic and aliphatic polyimides are included, as are polyetherimides and analogous polyimides having other linkages in the polyetherimides. The term polyimide includes polymers containing one or more kinds of imide units, copolymers containing one or more kinds of imide units, graft polymers

containing one or more kinds of imide units and imidizable polymers which have been partially or fully imidized.

Examples of specific polyimides useful in this invention include polyglutarimide, polymaleimide, polyitaconimide, and the like. Examples of the preparation of certain polyimides are described by Kopchik, U.S. Pat. No. 4,246,374, and Schröder, et al. U.S. Patent No. 3,284,425 hereby incorporated by reference into the present specification. In the subject invention it is possible to incorporate only one polyimide or a mixture of two or more polyimides may be employed.

The polyimides useful in the present invention are not limited to one method of preparation, but as an example a polyglutarimide may be prepared by continuously feeding poly(methylmethacrylate) to an extruder equipped with at least one pair of screws, each member of the pair rotating in a direction opposite that of the other member. Ammonia, or a primary amine such as methylamine, is continuously introduced to the extruder through an injection port, and unwanted byproducts and excess ammonia or amine are removed by progressively reducing the pressure at downstream extruder vents.

The polyimides preferred in practice in the present invention are imidemethacrylate copolymers and/or polyaliphatic imide copolymers. These materials usually have high Tg values and will increase the heat distortion of a base polymer when incorporated in a blend. The polyimide copolymers may have polar groups present or the polar groups can be substantially removed. A process for removal of these polar groups is described in U.S. Patent 4,727,117 to Hallden-Abberton, hereby incorporated by reference into the present specification. Several of these are manufactured and sold by the Rohm and Haas Company under the trade names of Paraloid® HT-510, Paraloid® EXL-4151, Paraloid® EXL-4171, Paraloid® EXL-4241 and Paraloid® EXL-4261.

The Tg of a polymer is a measure of the glass transition temperature of the polymer. The glass transition is the temperature at which a polymer changes from brittle to a plastic state. The addition of a polymer which has a high Tg will usually increase the heat distortion properties of the base polymer. The incorporation of polyimide polymers into other polymers is well known.

The heat distortion temperature as defined herein is the temperature wherein a plastic specimen deforms a specified distance under a specified load. The heat distortion testing was conducted in accordance with ASTM D-648 using a load of 264 psi.

Surface and volume resistivity testing is conducted in accordance with ASTM D-257. An adapter compresses an upper electrode and a lower circular electrode encircled with a ringing electrode. A sheet sample (3.5 inches in diameter and 1/8-1/16 inch thick) is placed between the upper and lower electrodes, and a voltage of 500 volts is applied between the electrodes. After 60 seconds, the resistance is recorded using an ohmmeter and converted into surface resistivity in Ohms/square or volume resistivity in Ohms-cm. The static decay test is carried out in accordance with Federal Test Method Standard 101B, Method 4046.1, "Electrostatic Properties of Materials" with a Static Decay Meter, model 406C obtained, from Electro-Tech Systems, Inc. Static decay is a measure of the ability of a material, when grounded, to dissipate a known charge that has been induced on the surface of the material. A sheet sample (3" x 6") with 1/8-1/16 inch thickness is placed between clamp electrodes contained in a Faraday cage. A 5,000 volt positive charge is applied to the surface of the specimen and the time in seconds required to dissipate the charge to 500 volts (10% of its initial value) or to 50 volts (1% of its initial value), after a ground is provided, is then measured. The test is repeated with a 5000 volt negative charge. This test is usually run on unconditioned samples and on samples conditioned for 48 hours at 15% and 50% relativity humidity (RH).

The base polymer as defined herein can be a homopolymer or a copolymer for example, polyvinyl chloride, chlorinated polyvinyl chloride, copolymers of styrene and acrylonitrile, terpolymers of styrene, acrylonitrile, and diene rubber, copolymers of styrene and acrylonitrile modified with an acrylate elastomer, copolymers of styrene and acrylonitrile modified with ethylene propylene diene monomer rubber, polystyrene and rubber modified impact polystyrene, nylon, polycarbonate, thermoplastic polyesters including polybutylene terephthalate, polyethylene terephthalate and polyether-ester block copolymers, polyurethane, polyphenylene oxide, polyacetal, polymethyl methacrylate. The base polymer can be further blended with one or more other polymeric materials, e.g., another base polymer, along with the electrostatic dissipative additive or other additives known in the art.

Polyvinyl chloride, PVC, vinyl polymer, or vinyl polymer material, as used herein, refers to homopolymers and copolymers of vinyl halides and vinylidene halides and includes post halogenated polymers such as CPVC or post chlorinated polyethylene. Examples of these vinyl halides and vinylidene halides are vinyl chloride, vinyl bromide, vinylidene chloride and the like. The vinyl halides and vinylidene halides may be copolymerized with each other or each with one or more polymerizable olefinic monomers having at least one terminal $CH_2=C<$ grouping. As examples of such olefinic monomers there may be mentioned the $\alpha,\beta$-olefinically unsaturated carboxylic acids, such as acrylic acid, methacrylic acid, ethacrylic acid, $\alpha$-

cyanoacrylic acid, and the like; esters of acrylic acid, such as methyl acrylate, ethyl acrylate, butyl acrylate, octyl acrylate, cyanoethyl acrylate, hydroxyethyl acrylate, and the like; esters of methacrylic acid, such as methyl methacrylate, butyl methacrylate, hydroxyethyl methacrylate, and the like; nitriles, such as acrylonitrile, methacrylonitrile, and the like; acrylamides, such as methyl acrylamide, N-methylol acrylamide, N-butyoxy methylacrylamide, and the like; vinyl ethers, such as ethyl vinyl ether, chloroethyl vinyl ether, and the like; the vinyl ketones; styrene and styrene derivatives, such as $\alpha$-methyl styrene, vinyl toluene, chlorostyrene, and the like; vinyl naphthalene, allyl and vinyl chloroacetate, vinyl acetate, vinyl pyridine, methyl vinyl ketone; the diolefins, including butadiene, isoprene, chloroprene, and the like; and other polymerizable olefinic monomers of the types known to those skilled in the art.

The present invention is particularly applicable to homopolymers and copolymers made by the polymerization of vinyl chloride or vinylidene chloride alone or in admixture with one or more polymerizable olefinic monomers copolymerizable therewith in amounts up to about 20% by weight, based on the weight of the monomer mixtures. Some copolymers have a tendency to decrease the clarity of the article and therefor the comonomer amount in the copolymer should be minimized if clear articles are desired. The most preferred vinyl polymer, or resin, is polyvinyl chloride (PVC) homopolymer produced by the mass polymerization process and the invention, for simplicity and convenience, will be described in connection therewith, it being understood that this merely intended in an illustrative sense and not limitative. Articles of this invention may be made from resins produced by the suspension, mass, emulsion or solution processes.

The present invention is also directed toward a process for preparing an electrostatic dissipative polymeric composition which comprises the step of adding to an interpolymer blend which comprises a base polymer and a polyimide, an effective amount of an electrostatic dissipative additive and mixing the blend and the additive to produce the electrostatic dissipative composition.

The compositions of the present invention are useful for a variety of applications. Some examples are tubes, paper trays, floor tiles, business machine housings, parts used within a business machine, eg., computers, etc., tote bins, and polymeric sheet and films.

Various conventional additives can be utilized in the compositions of the present invention. Thus, heat stabilizers, lubricants, impact modifiers, fire retardants, antioxidants, UV inhibitors, and processing aids generally employed for use in polymers, specifically in PVC can be implemented. Moreover, plasticizers, such as those typically used and known to one skilled in the art can also be utilized.

Various fillers and pigments can also be employed in conventional amounts. The amounts and types of additives, fillers and/or pigments required are well known to those skilled in the art.

## EXAMPLES

The invention will now be illustrated by examples. The examples are not intended to be limiting of the scope of the present invention. In conjunction with the general and detailed description above, the examples provide further understanding of the present invention and demonstrates some preferred embodiments of the invention.

In general, the examples described hereinbelow have been optimized for polyvinyl chloride. Further experimentation would allow one skilled in the art to optimize the properties and get an ESD additive useful for any base polymer system.

The following Example Nos. 1 to 4 describe methods for incorporation of a polyimide into PVC by coating of the PVC with the polyimide. Example Nos. 5 to 8 describe methods for incorporation of a polyimide into PVC by interpolymerization to form a polymer blend. These examples are only to illustrate viable methods to prepare the polymer blend of polyimide and PVC and are not meant to be limiting. Examples 9 to 12 describe procedures used to prepare electrostatic dissipative compositions of the subject invention. The remaining Example No. 13 describes the procedure for a composition comprising PVC, a styrene acrylonitrile copolymer (SAN), and an ESD additive prepared using standard techniques as a comparative example. This composition having a SAN heat distortion additive does not exhibit the enhancement in ESD properties of the subject invention.

### Example 1

In a 52.6 L. reactor equipped with a mixing blade, 5.6 Kg of polyvinyl chloride, 1.7 Kg of HT-510 polyimide and 24.0 Kg of water were mixed. To the resultant slurry was added 8 Kg of vinyl chloride (VCM). The slurry was mixed at 600 RPM for 4 hours at a temperature of about 60° C. The product was isolated and filtered. Stripping/drying of the resultant blend were accomplished using standard procedures.

**Example 2**

A baffled 5.4 gal. vessel (prepolymerizer) equipped with a mixing blade was charged with 1.9 Kg of HT-510 polyimide and 0.5 g of antioxidant and then evacuated and purged with nitrogen. The prepolymerizer was then charged 11.4 Kg of vinyl chloride. The temperature was maintained at about 40° C and the mixture stirred for about 60 min. The contents were then transferred to a previously prepared reactor.

The reactor, 16.3 gal., was prepared by adding 10.9 Kg of polyvinyl chloride. The reactor was then purged with nitrogen. After completion of the transfer of the contents of prepolymerizer to the reactor, the prepolymerizer was flushed with an additional 2.3 Kg of vinyl chloride. The slurry/solution was stirred at a temperature of about 40° C for 1 hr. Standard workup furnished 12.8 Kg of the PVC/polyimide blend.

**Example 3**

A reactor having a capacity of about 16.3 gal., was charged with 10.9 Kg of polyvinyl chloride resin, 1.9 Kg of HT-510 polyimide and 0.5 g of antioxidant. The reactor was then purged with nitrogen. 3.4 Kg of vinyl chloride was added to the reactor. The slurry/solution was stirred at a temperature of about 40° C for 1 hour. Standard workup furnished 12.7 Kg of the PVC/polyimide blend.

**Example 4**

Polyvinyl chloride resin, 100 g, was powder-mixed with 15 g HT-510 polyimide and placed in a bottle along with 333 parts water and 50 g of vinyl chloride (VCM). The bottle was sealed, then tumbled overnight at 40° C. In the morning, the bottle was chilled in ice water, and the VCM vented. None of the VCM had polymerized under these conditions, but it had dissolved the HT 510 and deposited it as a thin coating on the surface and in the pores of the suspension PVC particles when the VCM was evaporated. The product was filtered, then dried/stripped in a vacuum oven to furnish a fine powder not unlike, in appearance, the original powder blend of PVC and HT 510.

**Example 5**

A baffled 5.4 gal. vessel (prepolymerizer) equipped with mixing blades was evacuated and purged with nitrogen. To this was added nitric acid, 6.8 g of a 3% aqueous solution. The prepolymerizer was then charged with 13.6 Kg. of vinyl chloride. The solution was stirred and 4.0 g of bis(2-ethylhexyl) peroxydicarbonate (75%) in about 12 mL of methanol was added via syringe. This was followed by about 12 mL of methanol to flush the syringe. The solution was heated to 66.5° C at a rate of 1-2° C/min. The solution was allowed to react for about 50 min. to achieve about an 8% conversion of the monomer. The contents were then transferred to a previously prepared reactor.

The reactor, 16.3 gal., was prepared by adding 2452 g of HT-510 polyimide, 0.5 g of an antioxidant and 18.2 g of a 1% solution of polyvinyl acetate in methanol. The reactor was then evacuated and purged with nitrogen to remove oxygen and 7.7 Kg of vinyl chloride was added. After completion of the transfer of the contents of the prepolymerizer to the reactor, 7.3 g of t-butyl peroxypivalate (75%) in about 12 mL of methanol was added. This was followed by about 12 mL of methanol to flush the syringe. The reactor was heated to and then maintained at about 69° C for 3 hrs. This furnished 9.1 Kg of the PVC/polyimide interpolymer.

**Example 6**

The prepolymerizer was evacuated and purged with nitrogen. The prepolymerizer was then charged with 13.6 Kg. of vinyl chloride. The solution was stirred and 3.8 g of bis(2-ethylhexyl) peroxydicarbonate (75%) in 15 mL of a odorless mineral spirits (OMS) was added via syringe. The solution was heated to 65.5° C at a rate of 1-2° C/min. The solution was allowed to react for about 50 min. to achieve about an 8% conversion of the monomer. The contents were then transferred to a previously prepared reactor.

The reactor, 16.3 gal., was prepared by adding, with agitation, 1816 g of HT-510 polyimide and 0.5 g of an antioxidant. The reactor was then evacuated and purged with nitrogen to remove oxygen. Vinyl chloride, 12.7 Kg, was added. After completion of the transfer of the contents of the prepolymerizer to the reactor, 8.2 g of t-butyl peroxypivalate (75%) in 10 mL of OMS was added. This was followed by an additional 10 mL of OMS to flush the syringe. The reactor was heated to and then maintained at 69° C for 3 hrs. This furnished 9.1 Kg of the PVC/polyimide interpolymer.

**Example 7**

The prepolymerizer was evacuated and purged with nitrogen. The prepolymerizer was then charged with 3.1 g of a 3% aqueous solution of nitric acid and 3.2 g of ethylhexyl peroxydicarbonate in 12.5 mL of a odorless mineral spirits (OMS). The prepolymerizer was then charged with 10.5 Kg. of vinyl chloride. The solution was heated to 66 °C at a rate of 1-2 °C/min. The solution was allowed to react for about 50 min. to achieve about an 8% conversion of the monomer. The contents were then transferred to a previously prepared reactor.

The reactor, 16.3 gal., was prepared by adding 2452 g of EXL-4241 polyimide and 0.5 g of an antioxidant. The reactor was then evaluated and purged with nitrogen to remove oxygen and 13.6 Kg of vinyl chloride was added. After completion of the transfer of the contents of the prepolymerizer to the reactor, 10.5 g of t-butyl peroxypivalate (75%) in 7.6 mL of OMS was added. This was followed by an additional 7.6 mL of OMS to flush the syringe. The reactor was heated to and then maintained at 69 °C for 3.7 hrs. This furnished 12.7 Kg of the PVC/polyimide interpolymer.

**Example 8**

The prepolymerizer was evacuated and purged with nitrogen. The prepolymerizer was then charged with 3.4 g of a 3% aqueous solution of nitric acid and 3.2 g of ethylhexyl peroxydicarbonate in 12.5 mL of a odorless mineral spirits (OMS). The prepolymerizer was then charged with 11.4 Kg. of vinyl chloride. The solution was heated to 66 °C at a rate of 1-2 °C/min. The solution was allowed to react for about 50 min. to achieve about an 8% conversion of the vinyl chloride monomer to polymer. The contents were then transferred to a previously prepared reactor.

The reactor, 16.3 gal., was prepared by adding, with agitation, 1716 g of EXL-4171 polyimide and 0.5 g of an antioxidant. The reactor was then evaluated and purged with nitrogen to remove oxygen and 12.7 Kg of vinyl chloride was added. This mixture was heated for about 0.5 hr. until the temperature in the reactor reached about 47 °C. The mixture was stirred for an additional 0.5 hr. and then allowed to cool until it reached a temperature of 30 °C or less. At this time contents of the prepolymerizer were transferred to the reactor. After completion of the transfer to the reactor, 8.9 g of t-butyl peroxypivalate (75%) in 9.9 mL of OMS was added. This was followed by an additional 7.9 mL of OMS to flush the syringe. The reactor was heated to and then maintained at 69 °C for 3.7 hrs. This furnished 13.4 Kg of the PVC/polyimide interpolymer.

**Example 9**

The following ingredients, 2600 g of polyvinyl chloride/EXL-4241 polyimide interpolymer resin (prepared in Example 6), 11.5 g of a lubricant, 438 g of an ethylene oxide-epichlorohydrin (EO-ECH) copolymer having about 77% EO (19 phr ESD additive), 138 g of processing aid, and 115 g of a calcium carbonate filler were mixed and heated in a Henschel mixer. When the mixture reached 150 °F, 69 g of organotin stabilizer and 23 g of plasticizer were added. The mixture was mixed and heated in the Henschel mixer for an additional 15 minutes and allowed to cool. After the cooling period the mixture was subjected to further mixing in a Banbury mixer at 295-310 °F for about 2 min. The composition was then placed on a two roll mill at 300-320 °F and milled for about 3 minutes. The milled sheet was granulated, and then injection molded at 370-395 °F. The static decay results are given in Table II.

**Example 10**

2600 g of polyvinyl chloride coated with HT-510 polyimide resin prepared by the method described in Example 2 was compounded and injection molded according to the procedure in Example 9. Static decay results are given in Table II.

**Example 11**

2600 g of polyvinyl chloride/HT-510 polyimide interpolymer resin prepared by the method described in Example 5 was compounded and injection molded according to the procedure in Example 9. Static decay results are given in Table I.

**Example 12**

2600 g of polyvinyl chloride/HT-510 polyimide interpolymer resin prepared by the method described in Example 6 was compounded and injection molded according to the procedure in Example 9. Static decay results are given in Table II.

**Example 13**

The following ingredients, 2260 g of polyvinyl chloride resin, 226 g of a SAN heat distortion additive, 11.3 g of a lubricant, 497 g of an ethylene oxideepichlorohydrin (EO-ECH) copolymer (22 phr ESD additive), 136 g of processing aid, 45 g of antioxidant and 113 g of a filler were mixed and heated in a Henschel mixer. When the mixture reached 150° F, 68 g of organotin stabilizer and 23 g of plasticizer were added. The mixture was mixed and heated for about 15 minutes and allowed to cool. After the cooling period the mixture was subjected to further mixing in a Banbury mixer at 295-310° F for about 2.0 min. The composition was then placed on a two roll mill at 300-320° F and milled for about 3 minutes. The milled sheet was granulated, and then injection molded at 370-395° F. The static decay results are given in Table II.

**Table I**

| Property | PVC Example 13 | Inter-polymer Example 11 |
|---|---|---|
| Parts of EO/ECH Copolymers | 22 | 19 |
| Surface Resistivity | $1 \times 10^{12}$ | $1 \times 10^{11}$ |
| Volume Resistivity | $4 \times 10^{12}$ | $4 \times 10^{11}$ |
| Static Dissipation 5000 V Positive Charge | 0.16 sec | <0.01 sec |

Table I shows the increased efficiency of the PVC interpolymer. This composition has surface and volume resistivities which have improved by an order of magnitude as well as decrease in static dissipation time.

**Table II**

**Static Dissipation in Sec.**

| Example No. | 9 | | 10 | | 12 | | 13 | |
|---|---|---|---|---|---|---|---|---|
| EO/ECH (phr) | 19 | | 19 | | 19 | | 22 | |
| 5000 V Charge | + | - | + | - | + | - | + | - |
| 15% RH cutoff 10% | 0.02 | 0.02 | 0.02 | 0.02 | 0.02 | 0.02 | 0.16 | 0.17 |
| 15% RH cutoff 0% | 0.21 | 0.35 | 0.26 | 0.39 | 0.20 | 0.35 | 2.05 | 6.54 |
| 50% RH cutoff 10% | 0.01 | 0.02 | 0.02 | 0.02 | <0.01 | 0.01 | 0.07 | 0.06 |
| 50% RH cutoff 0% | 0.07 | 0.45 | 0.06 | 0.46 | 0.08 | 0.45 | 0.92 | 0.54 |

Table II compares three PVC/polyimide compositions with a control composition. Examples 9 and 12 employed PVC/polyimide interpolymers, Example 10 employed PVC which was coated with polyimide, PVC and a heat distortion modifier which were blended using standard mixing techniques.

The above preferred embodiments and examples are given to illustrate the scope and spirit of the present invention. These embodiments and examples will make apparent, to those skilled in the art, other embodiments and examples. These other embodiments and examples are within the contemplation of the present invention. Therefore, the present invention should be limited only by the appended claims.

## Claims

**1.** An electrostatic dissipative polymeric composition which comprises:
(a) a polymer blend comprising at least one base polymer and at least one polyimide; and
(b) an effective amount of at least one electrostatic dissipative additive.

**2.** The polymeric composition according to Claim 1 wherein the polymer blend is an intimate mixture of two polymers comprising a base polymer and a polyimide.

**3.** The polymeric composition according to Claim 2 wherein the polymer blend is formed by interpolymerization of one or more copolymerizable monomers in the presence of a polyimide copolymer.

**4.** The polymeric composition according to Claim 2 wherein the polymer and the polyimide are an intimate blend prepared by the process comprising
a) dissolving the polyimide in a solvent to form a solution; and
b) contacting the base polymer with the solution.

**5.** The composition according to Claim 4 wherein the solvent is vinyl chloride.

**6.** The composition of Claim 3 wherein at least one monomer is vinyl chloride.

**7.** The composition of Claim 3 wherein at least one monomer is acrylonitrile, butadiene or styrene.

**8.** The composition of Claim 1 wherein the electrostatic dissipative additive is a homopolymer of ethylene oxide or a copolymer of ethylene oxide and one or more copolymerizable monomers.

**9.** The composition of Claim 8 wherein the copolymerizable monomers are propylene oxide, 1,2-butylene oxide, epichlorohydrin, allyl glycidyl ether, n-butyl glycidyl ether, glycidyl acrylate, glycidyl methacrylate, 2-ethylhexyl ether, or styrene oxide.

**10.** The composition of Claim 9 wherein the electrostatic dissipative additive is a copolymer of ethylene oxide and epichlorohydrin or a chain extended polymer.

**11.** The composition of Claim 1 wherein the polyimide additive is a imidemethacrylate copolymer or polyaliphatic imide copolymer.

**12.** The composition of Claim 11 wherein the polyimide additive has a Tg of about 143° C or greater.

**13.** The composition of Claim 1 wherein the amount of polyimide additive is from about 2 parts to about 100 parts by weight per 100 weight parts of the base polymer.

**14.** The composition of Claim 13 wherein the amount of polyimide additive is from about 10 parts to about 35 parts by weight per 100 weight parts of the base polymer and the base polymer is PVC.

**15.** The composition of Claim 14 wherein the amount of electrostatic dissipative additive is from about 3 parts to about 30 parts by weight per 100 weight parts of the PVC/polyimide blend.

**16.** The composition of Claim 1 wherein the time for static dissipation to 0% of initial charge, according to Federal Test Method Standard 101B, method 4046.1, is less than 2 seconds for a sample conditioned at 15% relative humidity.

**17.** The composition of Claim 1 wherein the base polymer is:
polyvinyl chloride; chlorinated polyvinyl chloride; a copolymer of styrene and acrylonitrile; a terpolymer of styrene, acrylonitrile, and diene rubber; a copolymer of styrene and acrylonitrile modified with acrylate elastomers; a copolymer of styrene and acrylonitrile modified with ethylene propylene diene monomer rubber; a copolymer of polystyrene and rubber modified impact polystyrene; nylon; polycarbonate; thermoplastic polyester including polybutylene terephthalate, polyethylene terephthalate and polyether-ester block copolymer; polyurethane; thermoplastic polyurethane; polyphenylene oxide; polyacetal; polymethyl methacrylate; or mixtures thereof.

**18.** The polymeric composition of Claim 17 wherein the base polymer is polyvinyl chloride.

**19.** The composition according to Claim 1 having one of the following electrical properties:
(a) surface resistivity of 1 x $10^{12}$ Ohms/sq, or less as measured according to ASTM D-257; or
(b) volume resistivity of 1 x $10^{12}$ Ohms-cm or less as measured according to ASTM D-257.

**20.** A process for preparing an electrostatic dissipative polymeric composition which comprises the steps of adding to a polymer blend which comprises at least one base polymer and at least one polyimide; an effective amount of at least one electrostatic dissipative additive and mixing the blend and the additive to produce the electrostatic dissipative composition.

**21.** The process of Claim 20 wherein the amount of electrostatic dissipative additive is from about 3 parts to about 30 parts by weight and the polymer blend is 100 weight parts.

**22.** The process of Claim 20 wherein the base polymer is a polyvinyl chloride homopolymer or copolymer.

**23.** A polymeric article wherein the article is formed from the polymeric composition comprising:
(a) a polymer blend comprising at least one base polymer and at least one polyimide polymer; and
(b) at least one electrostatic dissipative additive.

**24.** The article of Claim 23 wherein the base polymer is a polyvinyl chloride homopolymer or copolymer.

**25.** The article of Claim 24 wherein said article is selected from the group consisting of sheet, film, tube, paper tray, business machine housing, part for use within a business machine, tote bin and floor tile.

**26.** A polyvinyl chloride composition comprising a polyvinyl chloride/polyimide blend and an effective amount of an electrostatic dissipative additive said composition having one of the following electrical properties:
(a) surface resistivity of 1 x $10^{13}$ Ohms/sq, or less as measured according to ASTM D-257; or
(b) volume resistivity of 1 x $10^{13}$ Ohms-cm or less as measured according to ASTM D-257;
and said composition having a heat distortion temperature of greater than 70° C.